# DEMANDE DE BREVET EUROPEEN

(11) **EP 4 614 200 A1**
(43) Date de publication de la demande: **10.09.2025**
(21) Numéro de dépôt: 25162359.1
(22) Date de dépôt: 07.03.2025
(51) Int. Cl.: G02B 6/126, G02B 6/12

(54) **COUPLEUR OPTIQUE A SEPARATION DE POLARISATION**

(30) Priorité: 08.03.2024 FR 2402366
(71) Demandeur: Teem Photonics, 38246 Meylan (FR); Université de Technologie de Troyes, 10010 Troyes Cédex (FR)
(72) Inventeur: AHMED, Muhammad, 10120 Saint-Germain (FR); BLAIZE, Sylvain, 10000 Troyes (FR); KEVORKIAN, Antoine, 38700 Le Sappey en Chartreuse (FR)
(74) Mandataire: Brevalex

(57) **Abrégé**

L'invention porte sur un coupleur optique à séparation de polarisation à séparation de polarisation, comprenant un premier guide d'onde (10) et un deuxième guide d'onde (20) couplés optiquement l'un à l'autre, le premier guide d'onde (10) supportant des modes optiques polarisés selon un premier et un deuxième états de polarisation (P₁ ; P₂) distincts à une longueur d'onde λ_{c} et le deuxième guide d'onde (20) supportant un mode optique polarisé selon le premier état de polarisation à la longueur d'onde λ_{c}.

Les premier et deuxième guides d'onde (10, 20) sont configurés de sorte qu'il y a égalité, sur toute la longueur du coupleur optique (1), des indices effectifs n_{1eff_P1} et n_{2eff_P1} associés au premier état de polarisation, se traduisant par une inégalité des indices effectifs n_{1eff_P2} et n_{2eff_P2} associés au deuxième état de polarisation.

## Description

### DOMAINE TECHNIQUE

L'invention porte sur le domaine de la photonique et de l'optique guidée, et concerne plus précisément un coupleur optique à séparation de polarisation.

### ÉTAT DE LA TECHNIQUE ANTÉRIEURE

Dans le domaine de la photonique, il est habituel d'utiliser des substrats photoniques comportant des guides d'onde intégrés pour assurer différentes fonctions optiques telles que la modulation, la photodétection, le multiplexage, etc. De tels guides d'onde intégrés peuvent supporter des modes optiques présentant les deux états de polarisation TE *(Transverse Electric)* et TM *(Transverse Magnetic).* Rappelons que, dans l'état de polarisation TE, le vecteur du champ électrique E est sensiblement parallèle au plan du substrat photonique, alors que, dans l'état de polarisation TM, le vecteur champ magnétique B est sensiblement parallèle au plan du substrat photonique. Or, il peut être utile de séparer les modes optiques de la lumière se propageant dans le guide d'onde intégré, selon leurs états de polarisation, soit pour ne garder qu'un seul état de polarisation (fonction de filtrage en polarisation), soit pour travailler sur chacun des états de polarisation indépendamment l'un de l'autre.

Il existe pour cela des coupleurs optiques à séparation de polarisation, qui comportent deux guides d'onde couplés optiquement l'un à l'autre de manière évanescente. Un tel coupleur optique comporte alors une entrée située dans un premier guide d'onde, recevant un signal optique ayant des modes présentant les deux états de polarisation TE et TM, et deux sorties distinctes, l'une étant située dans le premier guide d'onde pour fournir un mode selon une première polarisation (par ex. TE) et l'autre dans le deuxième guide d'onde pour fournir un mode selon la seconde polarisation (par ex. TM). A l'entrée du coupleur optique, notons que le signal optique peut présenter un état de polarisation aléatoire qui varie dans le temps.

Les documents US 2008/0031565 A1 et EP 2664949 A2 décrivent des exemples d'un tel coupleur optique à séparation de polarisation. Ils comportent deux guides d'onde couplés optiquement de manière évanescente. Dans la zone de couplage, l'un des deux guides d'onde présente une variation lente et continue de sa largeur, de manière à assurer un couplage adiabatique. Selon la condition adiabatique, la variation des dimensions transversales et/ou de l'indice de réfraction doit être suffisamment lente pour éviter le couplage intermodal, permettant ainsi de limiter les pertes optiques. Cette condition adiabatique se trouve notamment dans la publication de Sun et al. intitulée Adiabaticity criterion and the shortest adiabatic mode transformer in a coupled-waveguide system, Opt. Lett. 34, 280 (2009).

### EXPOSÉ DE L'INVENTION

L'invention a pour objectif de remédier au moins en partie aux inconvénients de l'art antérieur, et plus particulièrement de proposer un coupleur optique de séparation de polarisation, comportant deux guides d'onde couplés l'un à l'autre, présentant des performances de séparation de polarisation améliorées.

Pour cela, l'objet de l'invention est un coupleur optique à séparation de polarisation, comprenant un premier guide d'onde et un deuxième guide d'onde, couplés optiquement l'un à l'autre, le premier guide d'onde étant adapté à supporter des modes optiques polarisés selon un premier et un deuxième états de polarisation distincts à une longueur d'onde λ_{c} et présentant respectivement des indices effectifs n_{1eff_P1} et n_{1eff_P2}, le deuxième guide d'onde étant adapté à supporter un mode optique polarisé selon le premier état de polarisation à la longueur d'onde λ_{c} et présentant un indice effectif n_{2eff_P1}.

Selon l'invention, le premier guide d'onde présente un écart d'indice de réfraction maximum Δn_{1,m} avec son milieu environnant, et le deuxième guide d'onde présente un écart d'indice de réfraction maximum Δn_{2,m} avec son milieu environnant, différent de Δn_{1,m}.

De plus, les premier et deuxième guides d'onde présentent des dimensions transversales constantes.

Enfin, les écarts d'indice de réfraction maximums et les dimensions transversales sont prédéfinis de sorte qu'il y a égalité, sur toute la longueur du coupleur optique, des indices effectifs n_{1eff_P1} et n_{2eff_P1} associés au premier état de polarisation, se traduisant par une inégalité des indices effectifs n_{1eff_P2} et n_{2eff_P2} associés au deuxième état de polarisation, n_{2eff_P2} étant un indice effectif d'un mode optique polarisé selon le deuxième état de polarisation susceptible de se propager dans le deuxième guide d'onde.

Certains aspects préférés mais non limitatifs de ce coupleur optique sont les suivants.

Les écarts d'indice de réfraction maximums Δn_{1,m} et Δn_{2,m} sont de préférence différents l'un de l'autre d'au moins 0.1.

L'écart d'indice de réfraction maximum Δn_{2,m} est de préférence supérieur à l'écart d'indice de réfraction maximum Δn_{1,m}.

Les écarts d'indice de réfraction maximums Δn_{1,m} et Δn_{2,m} sont de préférence constants sur toute la longueur du coupleur optique.

Le deuxième guide d'onde peut être un guide d'onde continu ou un guide d'onde segmenté.

Le deuxième guide d'onde peut présenter une section droite rectangulaire.

Le deuxième guide d'onde peut être réalisé à base d'un oxyde ou d'un nitrure.

Le premier guide d'onde peut présenter une section droite rectangulaire, circulaire ou ovale.

Le premier guide d'onde peut être un guide d'onde à échange d'ions, ou un guide d'onde réalisé à base d'un élément de la colonne I ou IV du tableau périodique, ou d'ions ayant un degré d'ionisation de +1, ou d'un composé III-V ou IV des colonnes III, IV ou V du tableau périodique.

L'invention porte également sur un dispositif optoélectronique, comportant le coupleur optique selon l'une quelconque des caractéristiques précédentes, dans lequel le deuxième guide d'onde ne s'étend pas au-delà du coupleur optique.

Le dispositif optoélectronique peut comporter le coupleur optique selon l'une quelconque des caractéristiques précédentes, dans lequel le deuxième guide d'onde s'étend au-delà du coupleur optique et assure la propagation des modes optiques polarisés selon l'état de polarisation P₂.

L'invention porte également sur un procédé de fabrication d'un coupleur optique selon l'une quelconque des caractéristiques précédentes, comportant les étapes suivantes :
- détermination des indices de réfraction des premier et deuxième guides d'onde et de leurs dimensions transversales de sorte qu'il y a égalité des indices effectifs n_{1eff_P1} et n_{2eff_P1} associés au premier état de polarisation et inégalité des indices effectifs n_{1eff_P2} et n_{2eff_P2} associés au deuxième état de polarisation ;
- détermination de la longueur du coupleur optique maximisant le transfert des modes optiques polarisés selon le deuxième état de polarisation du premier guide d'onde vers le deuxième guide d'onde ;
- réalisation des premier et deuxième guides d'onde, lesquels présentent les indices de réfraction et les dimensions transversales déterminées sur toute la longueur déterminée du coupleur optique.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

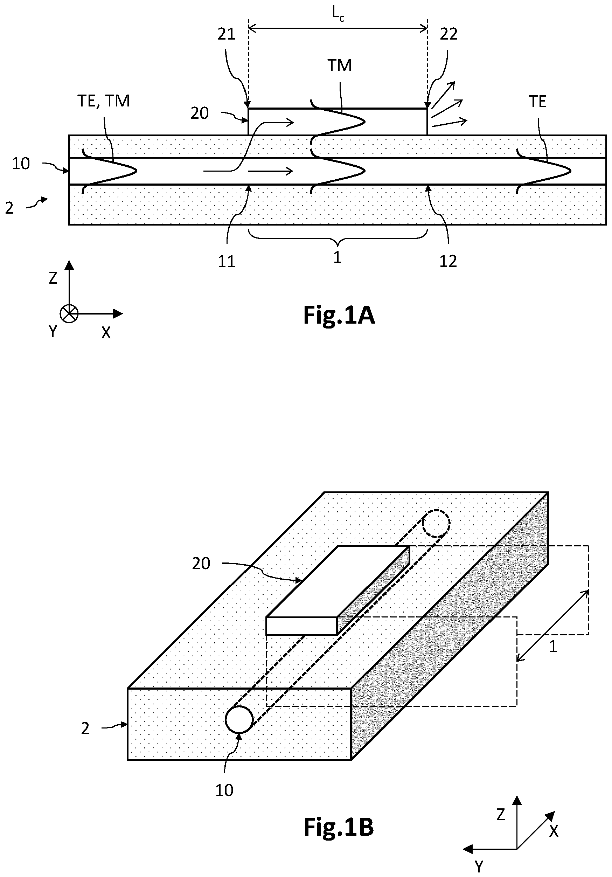

la figure 1A et la figure 1B sont des vues schématiques et partielles, en coupe longitudinale (fig.1A) et en perspective (fig.1B), d'un coupleur optique à séparation de polarisation selon un mode de réalisation, formant ici un filtre en polarisation, qui comporte un premier guide d'onde couplé à un deuxième guide d'onde, lequel ne s'étend que dans la zone de couplage et de manière continue ;

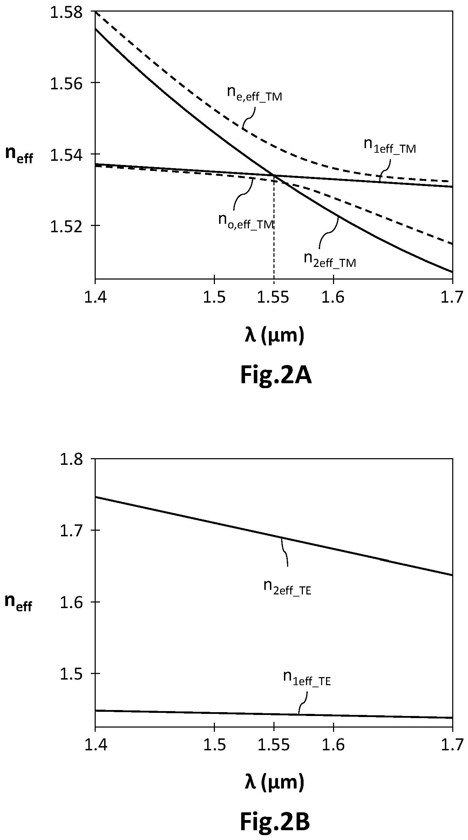

la figure 2A et la figure 2B illustrent des exemples d'évolutions de l'indice effectif des modes optiques associés aux guides d'onde (considérés isolément l'un de l'autre) d'un coupleur optique similaire à celui de la fig.1A, dans le cas de la polarisation TE (fig.2A) et dans le cas de la polarisation TM (fig.2B), le coupleur optique étant ici un filtre passe-TE ; la figure 2A illustre également l'évolution des indices effectifs des supermodes s'étalant sur les deux guides d'onde ;

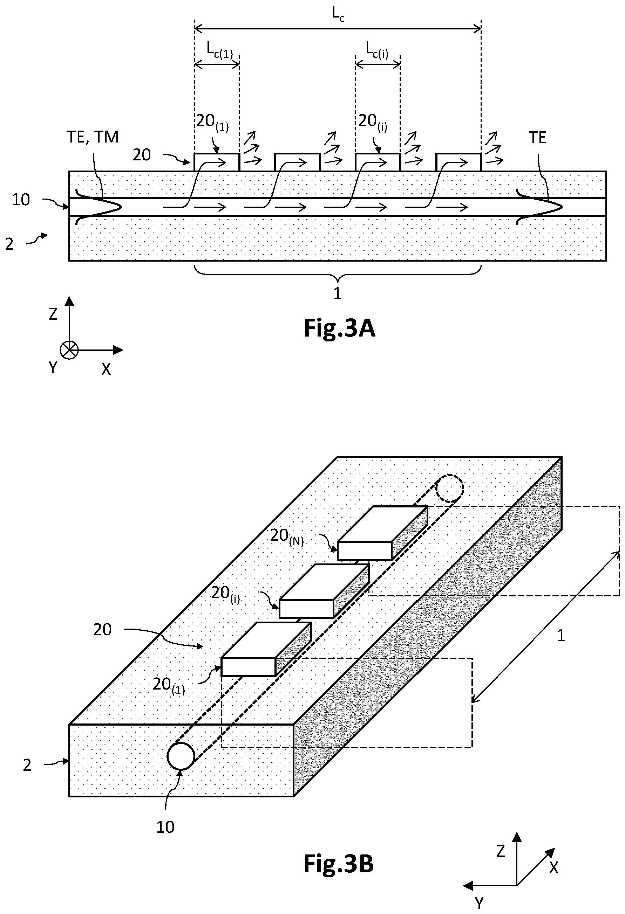

la figure 3A et la figure 3B sont des vues schématiques et partielles, en coupe longitudinale (fig.3A) et en perspective (fig.3B), d'un coupleur optique à séparation de polarisation selon un autre mode de réalisation, dans lequel le deuxième guide d'onde est segmenté et ne s'étend que dans la zone de couplage ;

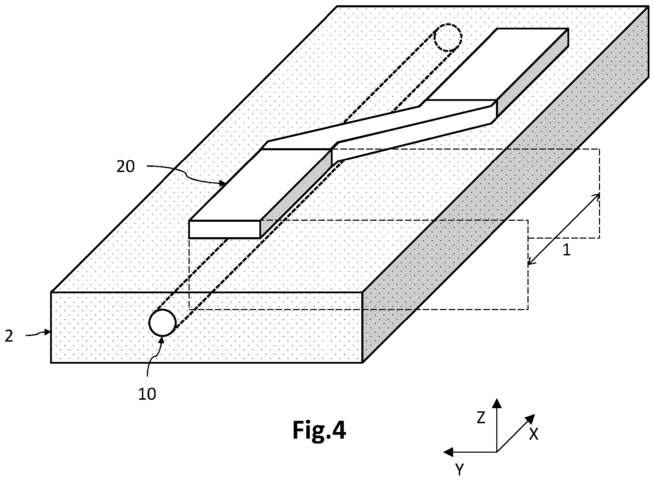

la figure 4 est une vue schématique et partielle, en coupe longitudinale, d'un coupleur optique à séparation de polarisation selon un autre mode de réalisation, dans lequel le deuxième guide d'onde est continu et s'étend également au-delà de la zone de couplage.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

Les figures 1A et 1B sont des vues schématiques et partielles, en coupe longitudinale (fig.1A) et en perspective (fig.1B), d'un coupleur optique 1 à séparation de polarisation selon un mode de réalisation.

D'une manière générale, le coupleur optique 1 comprend deux guides d'onde 10, 20 couplés optiquement l'un à l'autre de manière évanescente, à savoir :
o un premier guide d'onde 10, dans laquelle la lumière présente en entrée les deux états de polarisation P₁ et P₂ (à savoir TE et TM), et en sortie le seul état de polarisation P₁ (par ex. l'état TE), et
o un deuxième guide d'onde 20, qui reçoit du premier guide d'onde la lumière présentant l'autre état de polarisation P₂ (par ex. ici l'état TM).

On définit ici et pour la suite de la description un repère direct tridimensionnel orthogonal XYZ, où le plan XY est un plan parallèle au plan d'un substrat photonique 2, l'axe X étant orienté suivant l'axe longitudinal des guides d'onde 10, 20, l'axe Y étant orienté suivant la largeur des guides d'onde, et l'axe Z étant orienté du premier guide d'onde 10 vers le deuxième guide d'onde 20.

Le coupleur optique 1 comporte, d'une part, une entrée 11, et d'autre part, deux sorties distinctes 12, 22. L'entrée 11 est située dans le premier guide d'onde 10, et les deux sorties 12, 22 sont situées l'une 12 dans le premier guide d'onde 10 et l'autre 22 dans le deuxième guide d'onde 20. Il s'étend longitudinalement suivant l'axe X et présente une longueur de couplage L_{c}, qui sépare un plan amont où se situe l'entrée 11 du coupleur optique 1, et un plan aval où se situent les sorties 12, 22. La longueur de couplage L_{c} correspond donc à la longueur suivant laquelle il y a un transfert optimal de puissance optique du premier guide d'onde 10 vers le deuxième guide d'onde 20.

Ainsi, la lumière incidente se propage dans le premier guide d'onde 10 et entre dans le coupleur optique 1 par son entrée 11. Elle comporte alors des modes polarisés P₁ et P₂ (à savoir les états TE et TM). Le coupleur optique 1 assure une séparation des modes optiques selon les états de polarisation P₁ et P₂, de sorte que, à la sortie 12 (située dans le premier guide d'onde 10), la lumière est polarisée essentiellement dans un premier état P₁ (par ex. l'état TE) et peu ou pas dans le deuxième état P₂ (par ex. ici l'état TM), et à la sortie 22 (située dans le deuxième guide d'onde 20), la lumière est polarisée essentiellement dans le deuxième état P₂ (ici l'état TM) et peu ou pas dans le premier état P₁ (ici l'état TE).

A la différence des coupleurs optiques à séparation de polarisation de l'art antérieur mentionnés précédemment, le coupleur optique 1 est ici un coupleur à couplage directionnel résonant, et non pas à couplage adiabatique. Comme expliqué plus loin, il présente des performances élevées en termes taux d'extinction, de pertes optiques, de longueur de couplage, tout en préservant une large plage de longueurs d'onde de fonctionnement. Ainsi, le coupleur optique 1 peut présenter une longueur de couplage L_{c} de l'ordre de quelques dizaines de microns avec peu de pertes optiques et une faible sensibilité en longueur d'onde, alors que de telles structures à faible écart d'indice peuvent présenter une longueur de l'ordre du centimètre (cf. par exemple l'article de Parsy et al. intitulé Integrated Broadband Polarization Splitters Made By lon-Exchange on Glass, IEEE Photon. Technol. Lett., vol. 25, no. 23, pp.2373-2376, 2013).

Dans la suite de la description, à titre d'illustration, le coupleur optique 1 est adapté à transférer la lumière polarisée TM du premier guide d'onde 10 dans le deuxième guide d'onde 20, et à ne pas ou quasiment pas transférer la lumière polarisée TE qui reste alors confinée dans le premier guide d'onde 10. Le coupleur optique 1 est alors ici un filtre passe-TE. Evidemment, la variante où le coupleur optique 1 assure le transfert seul de la lumière polarisée TE est possible.

Le coupleur optique 1 comporte un substrat photonique 2 dans lequel est situé le premier guide d'onde 10, que l'on appelle alors 'guide d'onde intégré'. Le substrat photonique 2 est un substrat fonctionnalisé . Il peut s'agir d'un circuit photonique intégré (PIC, pour *Photonic Integrated Circuit* en anglais), et comporte, outre le guide d'onde intégré 10, des composants optiques passifs et/ou actifs (non représentés) couplés optiquement à celui-ci.

Le substrat photonique 2 peut être réalisé, comme dans cet exemple, à base de verre, par exemple en silicate ou en phosphate (mais tout verre transparent à la longueur d'onde λ_{c} du signal optique peut convenir). En variante, il peut également être réalisé à base de silicium, et peut être de type silicium sur isolant (SOI pour *Silicon On Insulator,* en anglais). Le substrat photonique 2 peut être réalisé à base d'autres matériaux.

Comme indiqué précédemment, le guide d'onde intégré 10 est adapté à permettre la propagation de la lumière présentant des modes polarisés TE et TM, à une longueur d'onde λ_{c} prédéfinie. Dans cet exemple, la longueur d'onde de la lumière est égale à 1550 nm.

Le guide d'onde intégré 10 est situé à l'intérieur du substrat photonique 2. Il est ici espacé verticalement de sa surface, sur laquelle repose le deuxième guide d'onde 20, par une distance z₁ ici non nulle. Cette distance z₁ est définie à partir du centre du guide d'onde 10 suivant l'axe vertical Z. Elle reste ici constante suivant l'axe X, mais en variante elle peut varier.

Il présente des dimensions transversales, dans le plan transversal YZ, sont peuvent être quelconques mais sont connues. On peut ainsi définir une largeur w₁ suivant l'axe Y et une hauteur h₁ suivant l'axe Z dans le cas d'une section droite polygonale voire ovale, ou un diamètre d₁ dans le cas d'une section droite circulaire. Dans cet exemple, et à titre purement illustratif, le guide d'onde intégré 10 présente une section droite sensiblement circulaire d'un diamètre d₁ᵢₙ à l'entrée 11 du coupleur optique 1, et d'un diamètre d₁ₒᵤₜ à la sortie 12. Le diamètre d₁ (d₁ᵢₙ et d₁ₒᵤₜ) est ici défini à partir d'une courbe d'isovaleur égale à 95% de la valeur maximale n_{1g,m} de l'indice de réfraction du guide d'onde intégré 10.

Le guide d'onde intégré 10 est réalisé en au moins un matériau et présente un indice de réfraction n_{1g} qui peut présenter une distribution spatiale dans le plan transversal YZ. Dans le cas ici d'un guide d'onde à échange d'ions (IEW, pour *Ion Exchange Waveguide* en anglais), cette distribution d'indice n_{1g}(y,z) varie continûment entre la valeur basse n₁ₛ du substrat photonique 2 jusqu'à une valeur maximale n_{1g,m}. Il peut ainsi être réalisé en un même matériau ou en une succession de matériaux différents. De préférence, il est réalisé en un même matériau, par exemple un matériau à base de verre (par ex. silicate, phosphate...), comme ici où le guide d'onde intégré 10 est un guide à échange d'ions. D'autres matériaux peuvent évidemment être utilisés, par exemple un matériau à base d'un élément de la colonne I ou IV du tableau périodique, ou d'ions ayant un degré d'ionisation de +1, ou d'un composé III-V ou IV des colonnes III, IV ou V du tableau périodique. A titre d'exemple, il peut s'agir du silicium, d'un nitrure, oxyde ou oxynitrure de silicium, du germanium, de l'InP, GaAs, et leurs composés, entre autres.

Le guide d'onde intégré 10 est entouré dans le plan XY par un milieu d'indice de réfraction n₁ₛ plus faible que n_{1g}. Ce milieu environnant peut être réalisé en un ou plusieurs matériaux, et correspond ici au substrat photonique 2 (en-dehors du guide d'onde intégré 10). Dans cet exemple, le substrat photonique 2 est réalisé en verre, de sorte que le guide d'onde intégré 10 est entouré par le même matériau.

On définit ici un écart d'indice de réfraction Δn₁ = n_{1g}(y,z) - n₁ₛ, qui présente une valeur maximale Δn_{1,m} = n_{1g,m} - n₁ₛ. Les indices de réfraction sont définis à la longueur d'onde λ_{c} de la lumière circulant dans le coupleur optique 1.

Dans le coupleur optique 1, les indices effectifs n_{1eff_TE}, n_{1eff_TM} associés respectivement aux modes polarisés TE et TM, se propageant dans le guide d'onde intégré 10 (considérés isolément du deuxième guide d'onde), sont constants suivant l'axe longitudinal X sur toute la longueur de couplage L_{c}. On considère ici les modes optiques se propageant dans le guide d'onde intégré 10 seul, et non pas les supermodes s'étalant sur les deux guides d'onde 10, 20.

De préférence, le guide d'onde intégré 10 présente une distribution d'indice n_{1g}(y,z) constant suivant l'axe longitudinal X. Ainsi, il présente un matériau optiquement invariant suivant l'axe longitudinal X. Dans cet exemple, le matériau du guide d'onde 10 et celui du substrat 2 restent inchangés en termes de composition chimique suivant l'axe X. En variante, ces matériaux peuvent changer suivant l'axe X mais gardent les mêmes indices de réfraction n_{1g}(y,z) et n₁ₛ.

De plus, la distribution transversale d'indice n_{1g}(y,z) du guide d'onde intégré 10 est de préférence constante suivant l'axe longitudinal X sur toute la longueur de couplage L_{c}. Ainsi, les dimensions de la section droite du guide d'onde intégré 10 restent inchangées suivant l'axe X. Les dimensions transversales sont définies de sorte que le guide d'onde intégré 10 supporte des modes polarisés TE et TM sur toute la longueur L_{c} du coupleur optique 1. Le rapport d'aspect de la section droite du guide d'onde intégré 10, c'est-à-dire le rapport entre les dimensions transversales suivant l'axe Y et l'axe Z, est, dans cet exemple (et à titre purement illustratif), égal à 1 environ, mais il peut être quelconque.

Rappelons ici que l'indice effectif n_{eff} d'un mode optique dépend des indices de réfraction du guide d'onde et du milieu environnant, ainsi que des dimensions transversales du guide d'onde. Il intervient en particulier dans la définition de la constante de propagation β, qui correspond au produit de 2π/λ_{c} et de l'indice effectif n_{eff}. L'indice effectif n_{eff} du mode optique correspond, d'une certaine manière, à l'indice de réfraction du guide d'onde 'vu' par le mode optique. Il est compris entre l'indice de réfraction n_{g} du guide d'onde et l'indice de réfraction nₛ du milieu environnant.

Comme indiqué précédemment, le deuxième guide d'onde 20 est adapté à permettre la propagation de la lumière polarisée selon l'état à transférer P₂, à savoir ici l'état de polarisation TM (comme indiqué précédemment, le cas inverse où seule la lumière polarisée TE est transférée est bien entendu possible).

Le deuxième guide d'onde 20 repose ici sur le substrat photonique 1, et est espacé verticalement du guide d'onde intégré 10 de la distance zₑ (comme indiqué précédemment, cette distance va du centre de la distribution d'indice n_{1g}(y,z) du guide d'onde 10 au centre de la distribution d'indice n_{2g}(y,z) du guide d'onde 20). Il est environné d'un milieu qui peut être le vide ou un gaz, ou être recouvert d'une couche d'encapsulation. Il peut également être intégré dans le même substrat photonique 2, ou être intégré dans un substrat photonique additionnel.

Il présente des dimensions transversales dans le plan YZ, à savoir une largeur w₂ suivant l'axe Y et une hauteur h₂ suivant l'axe Z dans le cas d'une section droite polygonale voire ovale, ou un diamètre d₂ dans le cas d'une section droite circulaire, ou plus généralement d'une section comprenant une distribution continue d'indice variable. Dans cet exemple, le deuxième guide d'onde 20 présente une section droite rectangulaire de dimensions d'entrée w₂ᵢₙ et h₂ᵢₙ et de dimensions de sortie w₂ₒᵤₜ et h₂ₒᵤₜ. Notons qu'une section droite carrée est un cas particulier d'une section droite rectangulaire.

Le deuxième guide d'onde 20 est réalisé en au moins un matériau et présente un indice de réfraction n_{2g} ici constant. Il peut ainsi être réalisé en un même matériau ou en une succession de matériaux différents. De préférence, il est réalisé en un même matériau, par exemple un matériau déposé par exemple par une technique de dépôt de couche mince. Il peut s'agir d'un oxyde de titane, de silicium, entre autres. Il peut également s'agir d'un guide à échange d'ions réalisé en surface du substrat photonique (la gaine étant alors formée par le verre du substrat photonique 2 suivant la direction -Z, et par l'air ou le vide suivant la direction +Z), de sorte qu'il présente une distribution spatiale d'indice n_{2g}(y,z) présentant une variation continue entre une valeur basse n₂ₛ jusqu'à une valeur maximale n_{2g,m}.

Il est entouré dans le plan XY par un milieu d'indice de réfraction n₂ₛ inférieur à n_{2g}. Ce milieu environnant peut être réalisé en un ou plusieurs matériaux, par le vide ou un gaz. Dans cet exemple, la gaine est formée par le verre et par le vide). Comme précédemment, on définit ici un écart d'indice Δn₂ = n_{2g}(y,z) - n₂ₛ et un écart d'indice maximum Δn_{2,m} = n_{2g,m} - n₂ₛ.

Notons que le deuxième guide d'onde 20 s'étend ici sur toute la longueur de couplage L_{c} du coupleur optique 1. Cette longueur de couplage est définie, de manière connue, pour correspondre à un transfert optimal de la puissance optique de la lumière polarisée selon l'état P₂, ici l'état TM. On évite que le coupleur optique présente une longueur supérieure à L_{c} de manière à limiter le transfert inverse de la lumière du guide d'onde 20 vers le guide d'onde 10.

Dans le coupleur optique 1, les indices effectifs n_{2eff_TE}, n_{2eff_TM} associés respectivement aux modes polarisés TE et TM, se propageant dans le deuxième guide d'onde 20 (considéré isolément du premier guide d'onde 10), sont constants suivant l'axe longitudinal X. On considère ici les modes optiques se propageant dans le deuxième guide d'onde 20 seul, et non pas les supermodes s'étalant sur les deux guides d'onde 10, 20.

Pour cela, le deuxième guide d'onde 20 présente des indices de réfraction n_{2g} et n₂ₛ constants suivant l'axe longitudinal X. Ainsi, il présente un matériau optiquement homogène suivant l'axe longitudinal X. Dans cet exemple, le matériau du guide d'onde et celui du milieu environnant reste inchangé en termes de composition chimique suivant l'axe X.

De plus, les dimensions transversales du deuxième guide d'onde 20, ici les dimensions w₂ et h₂, sont constantes suivant l'axe longitudinal X dans la zone de couplage. Ainsi, les dimensions de la section droite du deuxième guide d'onde 20 restent inchangées suivant l'axe X. Les dimensions transversales sont définies de sorte que le deuxième guide d'onde 20 supporte des modes présentant l'état de polarisation à transférer P₂, ici l'état TM et non pas l'état TE, sur toute la longueur L_{c} du coupleur optique 1. Aussi, le rapport d'aspect de la section droite du deuxième guide d'onde 20 est adapté en conséquence.

De plus, pour que le coupleur optique 1 ne transfère que la lumière polarisée selon l'état P₂ (ici l'état TM) et non pas la lumière polarisée selon l'état P₁ (ici l'état TE), les écarts d'indice maximums Δn_{1,m} et Δn_{2,m} sont différents l'un de l'autre, et sont prédéfinis, avec les dimensions transversales des guides d'onde, de sorte qu'il y a égalité, sur toute la longueur de couplage L_{c}, des indices effectifs n_{1eff_TM} et n_{2eff_TM} associés respectivement à la lumière polarisée TM se propageant dans le guide d'onde intégré 10 et à celle dans le deuxième guide d'onde 20. Du fait de la différence des écarts d'indice maximums Δn_{1,m} et Δn_{2,m}, cela se traduit par une inégalité, sur toute la longueur de couplage L_{c}, des indices effectifs n_{1eff_TE} et n_{2eff_TE} associés respectivement à la lumière polarisée TE se propageant dans le guide d'onde intégré 10 et à celle dans le deuxième guide d'onde 20.

Par égalité des indices effectifs des modes optiques présentant un même état de polarisation, ici n_{1eff_TM} et n_{2eff_TM}, on entend que l'écart relatif Δn_{eff_TM} / min{n_{1eff_TM} ; n_{2eff_TM}}, soit ( n_{1eff_TM} - n_{2eff_TM} )/ min{n_{1eff_TM} ; n_{2eff_TM}}, est inférieur ou égal à 0.5%, voire à 0.1%. Et par inégalité des indices effectifs des modes optiques présentant un même état de polarisation, ici n_{1eff_TE} et n_{2eff_TE}, on entend que l'écart relatif Δn_{eff_TE} / max{n_{1eff_TE} ; n_{2eff_TE}}, soit (n_{1eff_TE} - n_{2eff_TE )} / max{n_{1eff_TE} ; n_{2eff_TE}}, est supérieur ou égal à 5%, voire à 10%.

De préférence, les écarts d'indice maximums Δn_{1,m} et Δn_{2,m} sont différents l'un de l'autre d'au moins 0.1, de manière à améliorer la l'efficacité de séparation des états de polarisation. L'écart d'indice maximal Δn_{2,m} est de préférence supérieur à Δn_{1,m}, de préférence d'au moins 0.1.

Ainsi, du fait que, dans le coupleur optique 1, les indices de réfraction des guides d'onde et ceux des milieux environnants restent constants suivant l'axe longitudinal X, tout comme leurs dimensions transversales, le couplage de la lumière est de type directionnel résonant et non pas de type adiabatique. Les indices de réfraction et les dimensions transversales des guides d'onde sont prédéfinis, notamment en termes de différence entre Δn₁ et Δn₂, de sorte que, à la longueur d'onde λ_{c}, il y a égalité des constantes de propagation de la lumière polarisée TM et non pas de la lumière polarisée TE. Ainsi, il y a un couplage résonant entre les deux guides d'onde 10, 20 pour le seul état de polarisation TM, ceci sur toute la longueur de couplage L_{c} et non pas en un seul endroit de la longueur de couplage comme dans le cas adiabatique. Il y a donc un transfert optimal de la lumière polarisée TM du guide d'onde intégré 10 vers le deuxième guide d'onde 20, alors qu'il n'y a pas ou quasiment pas de transfert de la lumière polarisée TE.

Comme présenté maintenant, un tel coupleur optique 1 présente de bonnes performances optiques en termes de taux d'extinction et de pertes optiques, mais également en termes de longueur de couplage L_{c} et de sensibilité à la longueur d'onde. A titre d'exemple, la compacité du coupleur optique 1, en termes de longueur de couplage, est grandement améliorée par rapport aux coupleurs adiabatiques, de l'ordre de 100 fois plus courte à performances données.

On considère ici un coupleur optique 1 formant un filtre passe-TE à la longueur d'onde de 1550 nm. Le guide d'onde intégré 10 est un guide IEW réalisé dans un substrat photonique 2 en verre (par ex. silicate, phosphate...). Il présente une section droite de profil diffusé d'une dimension transverse moyenne de 4 µm environ mesurée à mi-hauteur du profil de diffusion. L'indice de réfraction maximum n_{1g} du guide d'onde intégré est égal à 1.54 environ à 1550 nm, et celui de son milieu environnant (ici le substrat 2) est égal à 1.50 environ.

Le deuxième guide d'onde 20 repose ici sur la surface du substrat photonique 2, et est espacé verticalement du guide d'onde intégré 10 de la distance zₑ égale à 2 µm environ. Il est réalisé en TiO₂, de sorte que son indice de réfraction n_{2g} est égal à 2.45 à une longueur d'onde de 1550 nm. Son milieu environnant est formé du verre du substrat photonique 2 et du vide. Il présente une largeur w₂ de 2 µm environ, une épaisseur h₂ de 0.3 µm environ, et s'étend continûment suivant l'axe X sur une longueur de 94 µm. Cette longueur correspond ici également à la longueur de couplage L_{c} du coupleur optique 1.

La figure 2A illustre la variation des indices effectifs n_{1eff_TM} et n_{2eff_TM} associés respectivement à la lumière polarisée TM se propageant dans le guide d'onde intégré 10 et à celle se propageant dans le deuxième guide d'onde 20. La figure 2B illustre la variation des indices effectifs n_{1eff_TE} et n_{2eff_TE} associés respectivement à la lumière polarisée TE se propageant dans le guide d'onde intégré 10 et à celle se propageant dans le deuxième guide d'onde 20. Les guides d'onde 10, 20 sont considérés isolément l'un de l'autre : on considère ici les modes optiques isolés et non pas les supermodes pairs et impairs. On représente également, en trait pointillé, les indices effectifs n_{e,eff_TM} et n_{o,eff_TM} des supermodes polarisés TM pair (d'indice n_{e,eff}, avec l'indice « e » pour *even* en anglais) et impair (d'indice n_{o,eff}, avec l'indice « o » pour *odd* en anglais).

Il apparaît qu'à la longueur d'onde λ_{c} égale à 1550 nm, les indices effectifs n_{1eff_TM} et n_{2eff_TM} sont égaux l'un à l'autre, de sorte qu'il y a également égalité des constantes de propagation β_{1_TM} et β_{2_TM} des modes polarisés TM associés aux guides d'onde 10, 20 pris isolément l'un de l'autre (modes isolés et non pas supermodes). Si l'on considère les supermodes, cela se traduit par une interaction entre le supermode pair polarisé TM (d'indice effectif n_{e,eff_TM}) et le supermode impair polarisé TM (d'indice effectif n_{o,eff_TM}), et donc par un minimum de la relation (n_{e,eff_TM} - n_{o,eff_TM}). Notons que la courbe n_{e,eff_TM}(λ) ne croise pas la courbe n_{o,eff_TM}(λ) sur la gamme spectrale considérée autour de λ_{c}. Il y a donc un transfert de la lumière polarisée TM du guide d'onde intégré 10 vers le deuxième guide d'onde 20. De plus, ce transfert est optimal dans la mesure où il y a égalité de ces constantes de propagation) sur toute la longueur de couplage L_{c}.

De plus, à cette même longueur d'onde λ_{c}, les indices effectifs n_{1eff_TE} et n_{2eff_TE} sont fortement différents l'un de l'autre, ici d'une valeur égale à 0.16 environ. Aussi, il y a une inégalité des constantes de propagation β_{1_TE} et β_{2_TE} des modes polarisés TE associés aux guides d'onde 10, 20 pris isolément l'un de l'autre (modes isolés et non pas supermodes). Autrement dit, il n'y a pas d'accord de phase entre le supermode pair polarisé TE et le supermode impair polarisé TE. Il n'y a donc pas ou quasiment pas de transfert de la lumière polarisée TE du guide d'onde intégré 10 vers le deuxième guide d'onde 20, et ceci sur toute la longueur de couplage L_{c}.

Notons encore ici que la longueur de couplage L_{c} a été prédéfinie de sorte que la lumière polarisée TM et transférée dans le deuxième guide d'onde 20 n'est pas à nouveau retransférée dans le guide d'onde intégrée 10. Ainsi, la longueur de couplage L_{c} est définie pour éviter tout phénomène de battement de la puissance optique transférée.

Aussi, il apparaît que les performances du coupleur optique 1 sont particulièrement élevées. Ainsi, à la sortie 12 du coupleur optique 1, les pertes optiques associées à la lumière polarisée TE sont très faibles, de l'ordre de 0.002 dB, alors qu'elles sont de l'ordre de 6.4 dB pour la lumière polarisée TM. Comme nous le verrons plus loin, le guide d'onde supérieur 20 peut être segmenté, ce qui peut augmenter les pertes optiques de la lumière polarisée TM dans le guide d'onde intégré 10 à près de 25 dB (dans la mesure où la longueur d'onde de la lumière peut être différente de la longueur d'onde d'accord λ_{c} définie précédemment, le transfert de puissance du guide 10 vers le guide 20 peut-être différent de 100%).

Par ailleurs, il apparaît que les pertes optiques de la lumière polarisée TE en sortie du coupleur optique 1 (dans le guide d'onde 10) sont très faibles et pas affectées par une éventuelle variation de la longueur d'onde λ_{c} dans une gamme comprise entre 1.5 et 1.6 µm. De plus, les pertes optiques de la lumière polarisée TM en sortie du coupleur optique 1 (puisqu'elle a été transférée dans le guide d'onde 20) restent très élevées dans cette gamme spectrale.

Les figures 3A et 3B sont des vues schématiques et partielles, en coupe longitudinale (fig.3A) et en perspective (fig.3B), d'un coupleur optique 1 à séparation de polarisation selon un autre mode de réalisation. Il diffère de celui des fig.1A et 1B essentiellement en ce que le deuxième guide d'onde 20 est, dans le coupleur optique 1, segmenté et non pas continu.

Un guide d'onde continu correspond à une continuité de matière suivant la longueur du guide d'onde, alors qu'un guide d'onde segmenté correspond à une succession de plots distincts (appelés guides élémentaires) suivant l'axe longitudinal X, espacés les uns des autres.

On considère que le deuxième guide d'onde 20 comporte N guides élémentaires 20₍ᵢ₎ distincts, avec N>1. Les guides élémentaires 20₍ᵢ₎ sont référencés par un indice i allant de 1 à N. La longueur de couplage L_{c(i)} de chaque guide élémentaire 20₍ᵢ₎ est définie de sorte que la lumière transférée ne soit pas à nouveau retransférée dans le guide d'onde intégré 10. La longueur de couplage totale L_{c} du coupleur optique correspond donc à la somme des longueurs de couplage L_{c(i)} des guides élémentaires et de l'espacement inter-guide élémentaire.

Dans cet exemple, le coupleur optique 1 peut être similaire à celui de l'exemple associé au fig.3A et 3B, dans le sens où le guide d'onde intégré 10 est identique à celui décrit précédemment, et où chaque guide élémentaire 20₍ᵢ₎ présente les mêmes dimensions que celles du deuxième guide d'onde 20, à savoir une largeur w₂ de 2 µm, une hauteur h₂ de 0.3 µm et une longueur de 93 µm.

Il apparaît qu'après 2 guides élémentaires 20₍ᵢ₎, la lumière polarisée TE dans le guide d'onde intégré 10 présente une atténuation de 0.004 dB alors que la lumière polarisée TM dans le deuxième guide d'onde 20 présente une atténuation de 12.9 dB. Et après 4 guides élémentaires, l'atténuation de la lumière polarisée TE est de 0.0087 dB et celle de la lumière polarisée TM est de 25.7 dB. Les performances du coupleur optique 1 sont ainsi fortement améliorées en termes d'atténuation de la lumière polarisée TM.

La figure 4 est une vue schématique et partielle, en perspective, d'un coupleur optique 1 selon un autre mode de réalisation.

Le coupleur optique 1 diffère de ceux illustrés précédemment en ce que le deuxième guide d'onde 20 s'étend également après le coupleur optique 1. L'objectif ici n'est pas de supprimer totalement la lumière polarisée TM, mais au contraire de la séparer de la lumière polarisée TE pour ensuite la transmettre vers d'autres composants optiques.

Aussi, le deuxième guide d'onde 20 s'étend à la verticale du guide d'onde intégré 10 sur une longueur L_{c} prédéfinie qui correspond à la longueur du coupleur optique 1. Puis, il bifurque pour ne plus être couplé au guide d'onde intégré 10 par évanescente. Aussi, la lumière transférée dans le deuxième guide d'onde 20 ne peut plus être retransférée dans le guide d'onde intégré 10.

Le coupleur optique 1 reçoit donc de la lumière polarisée TE et TM en entrée, sépare la lumière selon son état de polarisation, et fournit en sortie la lumière polarisée TE dans le guide d'onde intégré 10 et la lumière polarisée TM dans le deuxième guide d'onde 20. La lumière polarisée TM reste ensuite confiée dans le deuxième guide d'onde 20 qui la transmet en direction de différents composants optiques.

Le procédé de fabrication d'un tel coupleur optique 1 à séparation de polarisation comporte ainsi une étape de détermination des matériaux (et donc des indices de réfraction n_{1g}, n₁ₛ, n_{2g}, n₂ₛ) et des dimensions transversales des guides d'onde 10, 20 dans le coupleur optique 1, pour obtenir l'égalité des indices effectifs des modes optiques (isolés) polarisés selon l'état de polarisation choisi, supportés par le premier guide d'onde 10 et le deuxième guide d'onde 20. Cette étape peut être effectuée par simulation numérique, par exemple par différences finies dans le domaine temporel (FDTD, pour *Finite Difference Time Domain,* en anglais).

Du fait de la différence entre les écarts d'indice de réfraction maximums Δn_{1,m} et Δn_{2,m}, cette égalité des indices effectifs des modes optiques polarisés selon l'état de polarisation choisi conduit à une inégalité des indices effectifs des modes optiques (isolés) polarisés selon l'autre état de polarisation.

On détermine également la longueur L_{c} du coupleur optique 1 qui maximise le transfert de la lumière polarisée TM vers le deuxième guide d'onde 20 et minimise le transfert retour de cette même lumière polarisée TM vers le premier guide d'onde 10.

Puis, on réalise le premier guide d'onde 10 dans un substrat photonique 2, de sorte qu'il présente l'indice de réfraction n_{1g}(y,z) choisi entouré d'un milieu d'indice n₁ₛ, ainsi que les dimensions transversales définies sur toute la longueur de couplage L_{c}. Cette étape peut être réalisée par échange d'ions ou par dépôt de couche mince, lithographie et gravure.

Enfin, on réalise ensuite le deuxième guide d'onde 20 à la verticale du premier guide d'onde 10, de sorte qu'il présente l'indice de réfraction n_{2g} choisi entouré d'un milieu d'indice n₂ₛ, ainsi que les dimensions transversales définies sur toute la longueur de couplage L_{c}. Cette étape peut être réalisée par échange d'ions ou par dépôt de couche mince, lithographie et gravure. Cette étape a pu être réalisée avant la précédente si le guide d'onde 20 est situé en dessous du guide d'onde 10.

On obtient ainsi un coupleur optique 1 à séparation de polarisation, de type à couplage directionnel résonant, présentant des performances élevées dans la mesure où il y a accord de phase entre les supermodes polarisés selon l'état voulu sur toute la longueur de couplage.

Des modes de réalisation particuliers viennent d'être décrits. Différentes variantes et modifications apparaîtront à l'homme du métier.

## Revendications

1. Coupleur optique (1) à séparation de polarisation, comprenant un premier guide d'onde (10) et un deuxième guide d'onde (20), couplés optiquement l'un à l'autre, le premier guide d'onde (10) étant adapté à supporter des modes optiques polarisés selon un premier et un deuxième états de polarisation (P₁; P₂) distincts à une longueur d'onde λ_{c} et présentant respectivement des indices effectifs n_{1eff_P1} et n_{1eff_P2}, le deuxième guide d'onde (20) étant adapté à supporter un mode optique polarisé selon le premier état de polarisation à la longueur d'onde λ_{c} et présentant un indice effectif n_{2eff_P1}, **caractérisé en ce que** :
o le premier guide d'onde (10) présente un écart d'indice de réfraction maximum Δn_{1,m} avec son milieu environnant, et le deuxième guide d'onde (20) présente un écart d'indice de réfraction maximum Δn_{2,m} avec son milieu environnant, différent de Δn_{1,m} ;
o les premier et deuxième guides d'onde (10, 20) présentent des dimensions transversales (d₁ ; d₂) constantes ;
o les écarts d'indice de réfraction maximums et les dimensions transversales sont prédéfinis de sorte qu'il y a égalité, sur toute la longueur du coupleur optique (1), des indices effectifs n_{1eff_P1} et n_{2eff_P1} associés au premier état de polarisation, se traduisant par une inégalité des indices effectifs n_{1eff_P2} et n_{2eff_P2} associés au deuxième état de polarisation, n_{2eff_P2} étant un indice effectif d'un mode optique polarisé selon le deuxième état de polarisation (P₂) susceptible de se propager dans le deuxième guide d'onde.

2. Coupleur optique (1) selon la revendication 1, dans lequel les écarts d'indice de réfraction maximums Δn_{1,m} et Δn_{2,m} sont différents l'un de l'autre d'au moins 0.1.

3. Coupleur optique (1) selon la revendication 1 ou 2, dans lequel l'écart d'indice de réfraction maximum Δn_{2,m} est supérieur à l'écart d'indice de réfraction maximum Δn_{1,m}.

4. Coupleur optique (1) selon l'une quelconque des revendications 1 à 3, dans lequel les écarts d'indice de réfraction maximums Δn_{1,m} et Δn_{2,m} sont constants sur toute la longueur du coupleur optique (1).

5. Coupleur optique (1) selon l'une quelconque des revendications 1 à 4, dans lequel le deuxième guide d'onde (20) est un guide d'onde continu ou un guide d'onde segmenté.

6. Coupleur optique (1) selon l'une quelconque des revendications 1 à 5, dans lequel le deuxième guide d'onde (20) présente une section droite rectangulaire.

7. Coupleur optique (1) selon l'une quelconque des revendications 1 à 6, dans lequel le deuxième guide d'onde (20) est réalisé à base d'un oxyde ou d'un nitrure.

8. Coupleur optique (1) selon l'une quelconque des revendications 1 à 7, dans lequel le premier guide d'onde (10) présente une section droite rectangulaire, circulaire ou ovale.

9. Coupleur optique (1) selon l'une quelconque des revendications 1 à 8, dans lequel le premier guide d'onde (10) est un guide d'onde à échange d'ions, ou un guide d'onde réalisé à base d'un élément de la colonne I ou IV du tableau périodique, ou d'ions ayant un degré d'ionisation de +1, ou d'un composé III-V ou IV des colonnes III, IV ou V du tableau périodique.

10. Dispositif optoélectronique, comportant le coupleur optique (1) selon l'une quelconque des revendications 1 à 9, dans lequel le deuxième guide d'onde ne s'étend pas au-delà du coupleur optique.

11. Dispositif optoélectronique, comportant le coupleur optique (1) selon l'une quelconque des revendications 1 à 9, dans lequel le deuxième guide d'onde s'étend au-delà du coupleur optique et assure la propagation des modes optiques polarisés selon l'état de polarisation P₂.

12. Procédé de fabrication d'un coupleur optique (1) selon l'une quelconque des revendications précédentes, comportant les étapes suivantes :
o détermination des indices de réfraction des premier et deuxième guides d'onde (10, 20) et de leurs dimensions transversales (d₁, d₂) de sorte qu'il y a égalité des indices effectifs n_{1eff_P1} et n_{2eff_P1} associés au premier état de polarisation et inégalité des indices effectifs n_{1eff_P2} et n_{2eff_P2} associés au deuxième état de polarisation ;
o détermination de la longueur du coupleur optique (1) maximisant le transfert des modes optiques polarisés selon le deuxième état de polarisation du premier guide d'onde vers le deuxième guide d'onde ;
o réalisation des premier et deuxième guides d'onde (10, 20), lesquels présentent les indices de réfraction et les dimensions transversales déterminées sur toute la longueur déterminée du coupleur optique.
